# EUROPÄISCHE PATENTANMELDUNG

(11) **EP 1 130 531 A2**
(43) Veröffentlichungstag der Anmeldung: **05.09.2001**
(21) Anmeldenummer: 01102624.2
(22) Anmeldetag: 07.02.2001
(51) Int. Cl.: G06K 7/00

(54) **Verfahren zur Übertragung von Daten**

(30) Priorität: 03.03.2000 DE 10010585
(71) Anmelder: ATMEL Germany GmbH, 74072 Heilbronn (DE)
(72) Erfinder: Bruhnke, Michael, 80809 München (DE); Friedrich, Ulrich, 74248 Ellhofen (DE); Melchior, Marc, 85411 Hohenkammer (DE); Schülgen, Andreas, 81541 München (DE)
(74) Vertreter: Kolb, Georg

(57) **Zusammenfassung**

Die Erfindung betrifft ein Verfahren zum Übertragen von Daten in einem System bestehend aus einem ein Abfragefeld erzeugendem Lesegerät und mindestens zwei im Abfragefeld befindlichen Transpondern, die auf ein Startsignal im Abfragefeld hin eine ihnen eindeutig zugeordnete Bitfolge durch Belastungsmodulation des Abfragefeldes an das Lesegerät zurück übertragen.

Zur schnellen und sicheren Identifizierung aller Transponder im Abfragefeld ist für jede mögliche Wertigkeit jeder zu übertragenden Bitstelle der Bitfolge genau ein Zeitfenster zur Belastungsmodulation vorgesehen. Dabei hören die Transponder mit dem Übertragen ihrer Bitfolge auf, die eine Belastungsmodulation in einem Zeitfenster erkennen, indem sie selbst das Abfragefeld nicht aktiv durch Belastung moduliert haben. Nach dem vollständigen Übertragen der eindeutig zugeordneten Bitfolge eines Transponders, wird dieser in einen Ruhezustand versetzt und das Verfahren mit den übrigen Transpondern im Abfragefeld durch erneute Senden des Startsignals wiederholt. Das Verfahren wird solange wiederholt, bis in allen Zeitfenstern der ersten Bitstelle keine Belastungsmodulation mehr erfolgt.

Das Verfahren zeichnet sich insbesondere dadurch aus, dass bei der Anwesenheit von N Transpondern nur N+1 Abfragezyklen zum Erkennen aller Transponder benötigt werden und der gesamte für die Bitfolge zur verfügung stehende Wertevorrat als Kennung vergeben werden kann. Auch nach Beginn der Datenübertragung in des Abfragefeld kommende Transponder werden erkannt.

## Beschreibung

Die Erfindung betrifft ein Verfahren zum Übertragen von Daten in einem System bestehend aus einem ein Abfragefeld erzeugenden Lesegerät und mindestens zwei im Abfragefeld befindlichen Transpondern, die auf ein Startsignal im Abfragefeld hin eine ihnen eindeutig zugeordnete Bitfolge durch Belastungsmodulation des Abfragefeldes an das Lesegerät zurück übertragen.

Bei solchen Verfahren tritt die Schwierigkeit auf, dass sich die von den Transpondern durch Belastungsmodulation ausgesendete Bitfolgen im Abfragefeld überlagern und so zur Vermeidung von Datenkollisionen ein sogenanntes Arbitrierungsverfahren notwendig wird.

Aus der US 5,339,073 ist ein Verfahren bekannt, bei dem zur Abfrage mehrerer Transponder, die sich im Abfragefeld eines Lesegeräts befinden, zunächst ein Transponder zur Datenübertragung seiner ihm eindeutig zugeordneten Bitfolge ausgewählt wird. Dazu beginnen alle Transponder auf ein Startsignal im Abfragefeld zu antworten, die an einer ersten Stelle der Bitfolge einen vorgegebenen Wert aufweisen. Im nächsten Schritt beginnen alle Transponder auf ein Startsignal im Abfragefeld hin zu antworten, die an einer zweiten Stelle einen vorgegebenen Wert aufweisen und auch auf die vorangegangene Abfrage geantwortet haben. Auf diese Weise wird verfahren, bis ein einziger Transponder ausgewählt ist. Die Abfragestrategie folgt zum Beispiel einer Suche nach einer binaren Baumstruktur (Binary tree search).

Ein weiteres Verfahren ist aus der EP 405 695 A1 bekannt. Dort wird zur Abfrage eines von mehreren Transpondern, die sich im Abfragefeld eines Lesegeräts befinden, zunächst Frequenz des Abfragefeldes leicht geändert. Auf diese Frequenzänderung reagieren die Transponder mit einer Zeitspanne, in der sie keine Informationen auf das Abfragefeld modulieren. Diese Zeitspanne ist von Transponder zu Transponder unterschiedlich und hängt außerdem von der Größe der Frequenzänderung ab. Nach Ablauf der Zeitspanne beginnt ein erster Transponder mit der Datenübertragung während die anderen dadurch blockiert sind. Hat ein Transponder seine Bitfolge gesendet, bleibt er während der übrigen Runden der Abfrage still.

Aus der EP 494 114 A2 ist ein Verfahren bekannt mit dem auch Transponder mit der gleichen Bitfolge im Abfragefeld erkannt und registriert werden können.

Die oben genannten Verfahren weisen den Nachteil auf, dass zur sicheren Erkennung aller sich im Feld befindlichen Transpondern eine Vielzahl von Abfragenschritten notwendig ist und daher eine relativ lange Zeitbenötigt wird. Weiterhin wird in folge der unterschiedlichen Distanz der Transponder zum Lesegerät eine Erkennung einer Kollision beliebig schwierig.

Aufgabe der Erfindung ist es ein Verfahren zum Übertragen von Daten in einem System bestehend aus einem ein Abfragefeld erzeugendem Lesegerät und mindestens zwei im Abfragefeld befindlichen Transpondern, die auf ein Startsignal im Abfragefeld hin eine ihnen eindeutig zugeordnete Bitfolge durch Belastungsmodulation des Abfragefeldes an das Lesegerät zurück übertragen, anzugeben das schnell und sicher aller Transponder im Abfragefeld sicher identifizieren kann.

Diese Aufgabe wird durch ein Verfahren nach dem Oberbegriff des Anspruchs 1 dadurch gelöst, dass für jede mögliche Wertigkeit jeder zu übertragenden Bitstelle der Bitfolge genau ein Zeitfenster zur Belastungsmodulation vorgesehen ist und dass die Transponder mit dem Übertragen ihrer Bitfolge aufhören, die eine Belastungsmodulation in einem Zeitfenster erkennen, indem sie selbst das Abfragefeld nicht aktiv durch Belastung moduliert haben.

Nach dem vollständigen Übertragen der eindeutig zugeordneten Bitfolge eines Transponders, wird dieser in einen Ruhezustand versetzt und das Verfahren mit den übrigen Transpondern im Abfragefeld durch erneute Senden des Startsignals wiederholt. Das Verfahren wird solange wiederholt, bis in allen Zeitfenstern der ersten Bitstelle keine Belastungsmodulation mehr erfolgt.

Das Verfahren zeichnet sich insbesondere dadurch aus, dass bei der Anwesenheit von N Transpondern nur N+1 Abfragezyklen zum Erkennen aller Transponder benötigt werden und der gesamte für die Bitfolge zur Verfügung stehende Wertevorrat als Kennung vergeben werden kann. Auch nach Beginn der Datenübertragung in des Abfragefeld kommende Transponder werden erkannt.

Das Lesegerät sendet vorteilhaft nach jeder - außer der letzten - zu übertragenden Bitstelle ein Synchronisationssignal im Abfragefeld an die Transponder.

In einer weiteren Ausgestaltung des Verfahrens wird nach dem vollständigen Übertragen der eindeutig zugeordneten Bitfolge eines Transponders dieser veranlasst, weitere Daten an das Lesegerät zu senden bevor er in einen Ruhezustand versetzt wird. Dabei ist es von Vorteil, wenn das Lesegerät den Transponder durch Senden eines Anforderungssignals zum Übertragen der weiteren Daten veranlasst.

Kurze Beschreibung der Figuren:

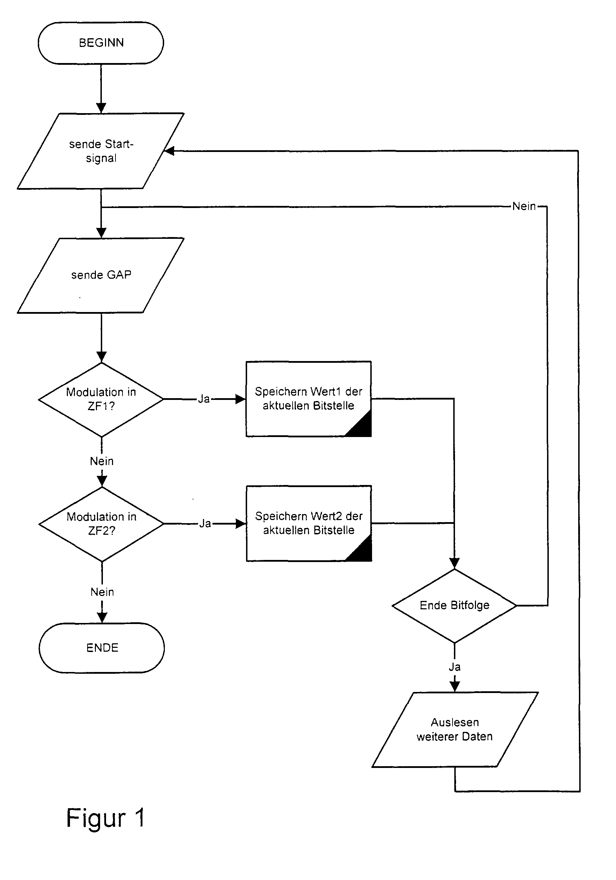

- Figur 1: zeigt ein Flussdiagramm des Verfahrensablaufs im Lesegerät;
- Figur 2: zeigt prinzipiellen zeitlichen Aufbau eines Protokolls;
- Figur 3: zeigt ein Flussdiagramm des Verfahrensablaufs im Transponder;

Im folgenden wird die Erfindung anhand eines Ausführungsbeispiel unter Zuhilfenahme der Figuren erläutert.

Zur Abfrage erzeugt das Lesegerät ein hochfrequentes Wechselfeld, das von den Transpondern zum Übertragen ihrer als Bitfolge abgespeicherten Kennung belastungsmoduliert wird. Sind mehrere Transponder im Abfragefeld, so überlagern sich ihre Antworten, so dass ein Auswahlverfahren zum Erkennen der Kennungen notwendig wird. Zu Beginn des Verfahrens wird vom Lesegerät ein Startsignal im Abfragefeld erzeugt. Das Startsignal besteht beispielsweise aus einem Kommando an die Transponder, mit dem sie veranlasst werden die Übertragung ihrer Kennung vorzubereiten. Als nächstes sendet das Lesegerät ein Synchronisationssignal (GAP), mit dem die Transponder ihre Antworten synchronisieren, d.h. alle Transponder versuchen zur nahezu gleichen Zeit mit der Antwort zu beginnen. Das Synchronisationssignal (GAP) entsteht durch eine Austastlücke im Abfragefeld, in der die Amplitude auf Null bzw. einen deutlich reduzierten Wert zurückgeht.

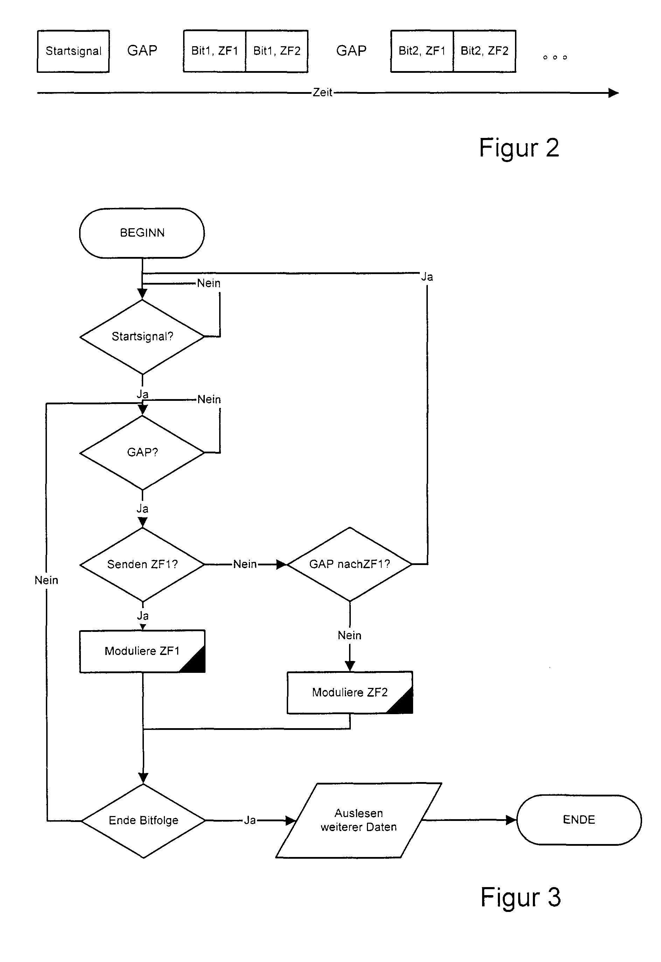

Im Anschluss an das Synchronisationssignal (GAP) stehen den Transpondern eine Reihe von zeitfenstern zur Verfügung, in denen sie entsprechend ihrer Kennung antworten. Es ist nach den vorliegenden Verfahren vorgesehen, für jede mögliche Wertigkeit einer Bitstelle der als Bitfolge gespeicherten Kennung genau ein Zeitfenster vorzusehen. im Ausführungsbeispiel sind - wie in der Figur 2 dargestellt ― pro Bitstelle zwei Wertigkeiten vorgesehen, nämlich Null und Eins. Daher sind im Protokoll pro Bitstelle genau zwei Zeitfenster (ZF1, ZF2), die sich nicht überlappen, eingerahmt von zwei Synchronisationssignalen (GAP) angeordnet.

Alle Transponder, die in der ersten Bitstelle eine erste Wertigkeit (Wert1) aufweisen beginnen im ersten Zeitfenster (ZF1) mit der Belastungsmodulation. Alle übrigen Transponder, die in der ersten Bitstelle eine zweite Wertigkeit (Wert2) aufweisen beginnen im zweiten Zeitfenster (ZF2) mit der Belastungsmodulation, aber nur wenn kein anderer Transponder im ersten Zeitfenster das Feld durch Belasten moduliert hat. Dazu sendet das Lesegerät ein Synchronisationssignal (GAP) nachdem es eine Modulation im ersten Zeitfenster erkannt hat und unterbrich so die Übertragung im zweiten Zeitfenster. Ist dies der Fall, verhalten sich alle Transponder, die im zweiten Zeitfenster senden wollten, solange still, bis ein weiteres Startsignal im Abfragefeld das Verfahren erneut startet.

Im Lesegerät wird als Wertigkeit der identifizierten Bitstelle je nachdem ob die im ersten oder im zweiten Zeitfenster eine Modulation vorgelegen hat, die erste oder zweite Wertigkeit festgehalten. Wurde durch das Lesgerät noch nicht die gesamte Bitfolge identifiziert, sendet es ein Synchronisationssignal (GAP) aus und veranlasst damit alle nicht still gestellten Transponder mit der Modulation in den jeweiligen Zeitfenstern der nächsten Bitstelle fortzufahren.

Auf diese Weise wird solange verfahren, bis die vollständige Bitfolge eines Transponder vom Lesegerät empfangen und identifiziert wurde. Im Anschluss daran können weitere Daten von dem derart selektierten Transponder angefordert und ausgelesen werden. Zum Abschluss wird der Transponder vom weiteren Auswahlverfahren ausgeschlossen, so dass er erst dann wieder am Verfahren teilnimmt, wenn er durch ein spezielles Kommando dazu aufgefordert wird. Mit dem Senden eines Startsignals nehmen wieder alle bislang noch nicht identifizierten Transponder am Verfahren teil und beginnen nach dem nächsten Synchronisationssignal mit dem modulieren entsprechend der Wertigkeit der ersten Bitstelle in ihrer Kennung.

Wurden den nach entsprechend vielen Runden alle Transponder durch das Lesegerät ausgewählt und identifiziert, melden sich nach dem Start- und dem Synchronisationssignal weder im ersten noch im zweiten Zeitfenster Transponder durch Modulation des Abfragefelds. Daran kann das Lesegerät erkennen, dass sich keine weiteren Transponder im Abfragefeld befinden.

Kommen beim laufenden Auswahlverfahren weitere Transponder in das Abfragefeld hinein, so nehmen sie ab dem nächsten Startsignal automatisch am Auswahlverfahren teil und werden entsprechend der Priorität ihrer als Bitfolge gespeicherten Kennung gleich oder in späteren Runden des Verfahrens ausgewählt.

Die Transponder werden automatisch nach der Reihenfolge der Kennungen abgearbeitet. Höhere Priorität weisen Kennungen auf, die an den ersten Bitstellen Wertigkeiten besitzen, die zu Modulationen im ersten Zeitfenster führen.

## Patentansprüche

1. Verfahren zum übertragen von Daten in einem System bestehend aus einem ein Abfragefeld erzeugendem Lesegerät und mindestens zwei im Abfragefeld befindlichen Transpondern, wobei die Transponder auf ein Startsignal im Abfragefeld hin, eine ihnen jeweils eindeutig zugeordnete Bitfolge durch Belastungsmodulation des Abfragefeldes an das Lesegerät zurück zu übertragen,
**dadurch gekennzeichnet**,
dass für jede mögliche Wertigkeit jeder zu übertragenden Bitstelle der Bitfolge genau ein Zeitfenster zur Belastungsmodulation vorgesehen ist und dass die Transponder mit dem Übertragen ihrer Bitfolge aufhören, die eine Belastungsmodulation in einem Zeitfenster erkennen, indem sie selbst das Abfragefeld nicht aktiv durch Belastung moduliert haben.

2. Verfahren nach Anspruch 1, **dadurch gekennzeichnet**, dass nach dem vollständigen Übertragen der eindeutig zugeordneten Bitfolge eines Transponders dieser in einen Ruhezustand versetzt und das Verfahren mit den übrigen Transpondern im Abfragefeld durch erneutes Senden des Startsignals wiederholt wird.

3. Verfahren nach Anspruch 2, **dadurch gekennzeichnet**, dass das Verfahren solange wiederholt wird, bis in allen Zeitfenstern der ersten Bitstelle keine Belastungsmodulation mehr erfolgt.

4. Verfahren nach einem der Ansprüche 1 bis 3, **dadurch gekennzeichnet**, dass das Lesegerät vor jeder zu übertragenden Bitstelle ein Synchronisationssignal im Abfragefeld an die Transponder sendet.

5. Verfahren nach Anspruch 4, **dadurch gekennzeichnet**, dass das Lesegerät das Synchronisationssignal sendet, wenn im aktuellen Zeitfenster der Bitstelle eine Belastungsmodulation erfolgt ist.

6. Verfahren nach einem der Ansprüche 1 bis 5, **dadurch gekennzeichnet**, dass nach dem vollständigen Übertragen der eindeutig zugeordneten Bitfolge eines Transponders dieser weitere Daten an das Lesegerät sendet bevor er in einen Ruhezustand versetzt wird.

7. Verfahren nach Anspruch 6, **dadurch gekennzeichnet**, dass das Lesegerät durch Senden eines Anforderungssignals den Transponder zum Übertragen der weiteren Daten veranlasst.
